# EUROPEAN PATENT SPECIFICATION

(11) **EP 1 002 387 B1**
(45) Date of publication and mention of the grant of the patent: **05.09.2001**
(21) Application number: 96901725.0
(22) Date of filing: 26.01.1996
(51) Int. Cl.: H04H 1/00

(54) **A METHOD AND A SYSTEM FOR COMMUNICATION OF CONTROL INFORMATION FROM A CONTROL INFORMATION GENERATOR TO ONE OR MORE COMPUTER INSTALLATIONS**
VERFAHREN UND SYSTEM ZUR KOMMUNIKATION VON STEUERINFORMATION EINES STEUERGENERATORS ZU EINER ODER MEHREREN COMPUTERINSTALLATIONEN
PROCEDE ET SYSTEME DE COMMUNICATION D'INFORMATIONS DE COMMANDE DEPUIS UN GENERATEUR D'INFORMATIONS DE COMMANDE A UNE OU PLUSIEURS INSTALLATIONS D'ORDINATEURS

(43) Date of publication of application: 24.05.2000
(73) Proprietor: Solvason, Ivan, 2840 Holte (DK)
(72) Inventor: Solvason, Ivan, 2840 Holte (DK)
(74) Representative: Raffnsöe, Knud Rosenstand
(86) International application number: DK9600044
(87) International publication number: WO9727683

(56) References cited:
- EP-A- 0 152 341
- EP-A- 0 601 437
- WO-A-91/03891
- WO-A-95/28044
- FR-A- 2 702 613
- US-A- 5 189 630

## Description

This invention relates to a method and a system for initiating an action controlled by a prestored programme in one or more computer installations by communication of control information message from a control information generator in a server installation remote from said one or more computer installations.

From television entertainment it is known to provide for interactive viewer participation in performance of a video game forming part of a broadcast television programme. One example is a video game in which an animated cartoon figure is guided through a labyrinth by instructions from a viewer using his standard push button telephone set, whereby operations of specific digit keys of the telephone set keyboard causes the cartoon figure to move in specific predetermined ways through the labyrinth such as moving forwards, to the right or left or circumventing obstructions.

US-A-5,189,630 discloses a method for encoding and broadcasting information about live events using computer pattern matching techniques, by which a live event may be broadcast with a combination signal including a computer coded description of subevents constituting the event and an audio or video signal. In a viewer's computer an indication is thereby provided to the viewer of the occurrence of subevents of interest and the viewer of the event is allowed to search for such subevents in a recording of the event. In a specific embodiment of this method the encoded description of the event may include status information in its representation of subevents and be combined with other signals such as an audio signal or a video signal to produce a combined signal which is transmitted to a viewer with a computer.

As will appear from the following description the method and system according to the invention have numerous applications, but in broad terms it is a main object of the invention to enable control of one or more computer installations by transmission of a control information signal sequence of a relatively short duration as part of an audio and/or video information carrying signal to initiate certain actions controlled by one or more prestored programmers in such computer installations.

By an audio and/or video information carrying signal is in this context understood an analog audio and/or video signal generated and transmitted by conventional means as well as audio and/or video information converted into and transmitted as digital signals.

In accordance with the above main object the invention provides in its broadest aspect a method for initiating an action controlled by a prestored programme in one or more computer installations by communication of a control information message from a control information generator in a server installation remote from said one or more computer installations, comprising the steps of
generating said control information message in the control information generator as a message of alpha-numeric information,
encoding said message into a signal sequence of a relatively short duration,
adding a start indicator signal and an end indicator signal at the beginning and end of said signal sequence,
incorporating said signal sequence with said start and end indicator signals into an overall audio or video information carrying signal comprising signal parts from other signal sources than said control information generator,
communicating said overall signal to said one or more computer installations,
retrieving said signal sequence from said overall signal at each of said computer installations,
decoding said signal sequence into said message of alpha-numeric information, and
using said message to initiate said action in each of said computer installations, said action being of a duration substantially longer than said relatively short duration.

In a relatively simple preferred embodiment the control information signal sequence may comprise a series of audio signals representing individual characters (letters, digits) of said message of alpha-numeric information, and said start and end indicator signals are audio signals distinct from said character representing signals.

The overall audio or video signal into which the audio signal containing the control information is incorporated may typically form part of a broadcast radio or television signal. The control information communicated in this way may be used by any member of the listening or viewing public having access to a personal computer equipped with means to retrieve and use the control information, including a computer programme in which certain actions can be initiated by the control information.

However, an addressed communication of the control information may also be foreseen through the provision of person identification information at each of said computer installations to identify data for a user of said installation as belonging to any of a number of specific groups of persons, where each groups is defined by at least one common personal data parameter, and the further steps of adding addressing information to the message generated by said control information generator to address at least one of said groups and using the reconverted massages in the corresponding computer installations to initiate a prestored computer programme specific for said group or groups.

In its structural aspect the invention provides a system for initiating an action controlled by a prestored programme in one or more computer installations by communication of control information from a control information generator remote from said one or more computer installations, said control information generator comprising
means for generating said control information in the form of a message of alpha-numeric information,
means for encoding said message into a signal sequence of a relatively short duration,
said control information generator forming part of a server installation comprising
means for incorporating said signal sequence into an overall audio and/or video information carrying signal comprising signal parts from other sources than said control information generator,
means for adding a start indicator signal and an end indicator signal at the beginning and end of said sequence, and
means for communicating said overall signal including said signal sequence with said start and end indicator signals to said one or more computer installations, and
each of said computer installations comprising
means for retrieving said signal sequence from said overall signal,
means for decoding said signal sequence into said message of alpha-numeric information, and
means for using said message to initiate said action controlled in each of said computer installations, said action being of a duration substantially longer than said relatively short duration.

For the above-mentioned relatively simple embodiment of forming the control information signal sequence as a series of audio signals said encoding means may comprise means for converting said message into a series of audio signals representing individual characters (letters, digits) of said alpha-numeric information and said receiver device may comprise an audio receiver part.

The server installation may form part of a broadcasting system or it may comprise recording means for recording the overall audio and/or video carrying signal on a record carrier, whereby each of said computer installations must comprise a playback apparatus for said record carrier.

The method and the system according to the invention and a number of non-limiting applications thereof will be explained in more detail in the following with reference to the accompanying schematical drawings, in which
figure 1 is a general representation of the main constituents of the system of the invention;
figure 2 illustrates the generation and encoding of a simple control information containing an audio signal sequence by the method of the invention;
figure 3 illustrates the retrieval of a simple audio signal and decoding of the control informa tion in a computer installation controlled there by;
figure 4 and 5 are examples of single and dual tone conversion schemes for digit-by-digit conversion of numeric control information into simple single or dual tone signals;
figure 6 is a graphical representation of an example of a control information carrying audio signal sequence; and
figures 7 and 8 show practical applications of the method and system of the invention in generalized schematical representations.

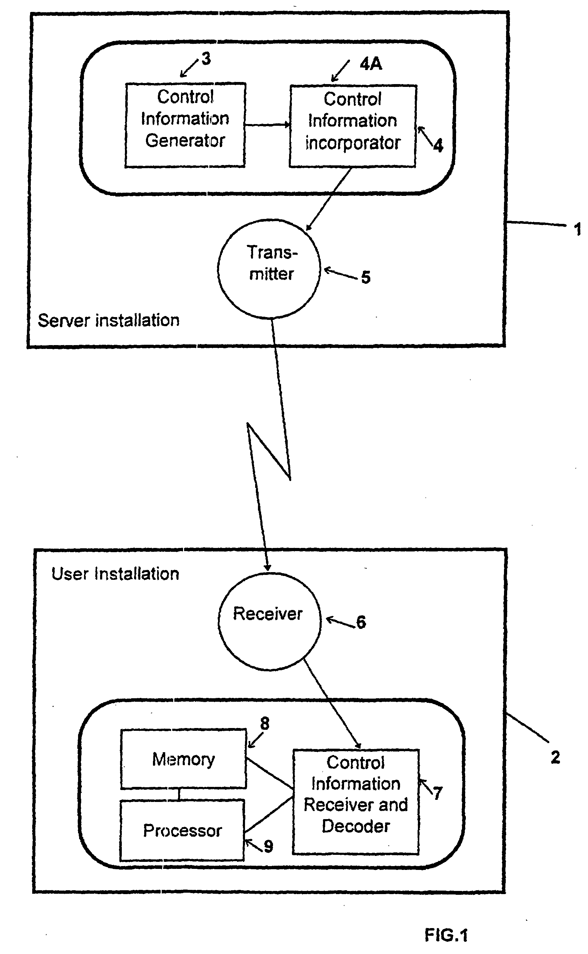

The schematical representation in fig. 1 shows an embodiment of a communication system according to the invention comprising a server installation 1 transmit ting an overall signal containing audio and/ or video information such as a conventional analog radio or television signal, which is received by a number of user installations 2, only one of which is represented in the figure.

In the embodiment shown, the main constituents of the server installation 1 are a control information gener ator and encoder 3, by means of which a control information message containing a limited number of alpha-numeric characters is generated and encoded into a signal sequence of a relatively short duration composed of a series of simple audio signals representing the individual characters of the message, a device 4 for adding or incorporating the control information message generated by the control information encoder 3 into the overall signal carrying audio and/or video information comprising signal parts as indicated by arrow 4A supplied from other signal sources, not shown, than the control information encoder 3, and a transmitter device 5 for transmission of the overall signal with the incorporated control information message.

Correspondingly, the user installation 2 comprises a receiver device 6 for receiving the overall signal transmitted by the server installation 1, a control information message retriever and decoder 7 for retrieving the control information carrying audio signal sequence from the overall signal received by the receiving device 6 and decoding this signal sequence into the original alpha-numeric control information message incorporated in the overall signal in the server installation 1, a data processor 9 and a memory 8 with at least one prestored programme controlling the performance of an action or certain actions initiated in response to the control information message received from the server installation 1 as part of the transmitted overall audio or video information carrying signal.

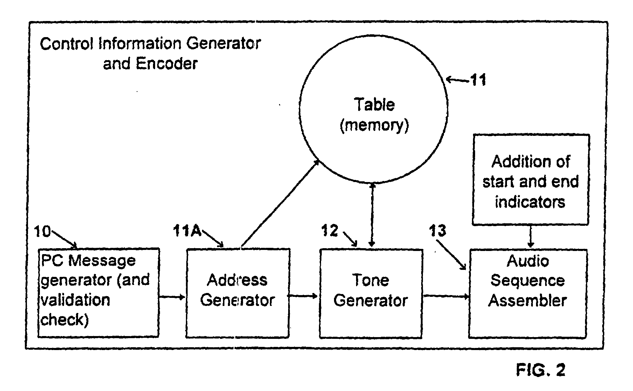

Fig. 2 shows the main parts and illustrates the data and signal processing in the control information generator and encoder 3 in the server installation 1.

The alpha-numeric control information message is typically generated by a personal computer 10 controlled by dedicated software for generation of a message which can be incorporated into an overall audio and/or video information carrying signal and retrieved again from this overall signal.

The significant information carrying part of the control information message is entered from the keyboard of the personal computer 10 in form of a sequence of a limited number of characters ranging typically from 10 to 150 characters.

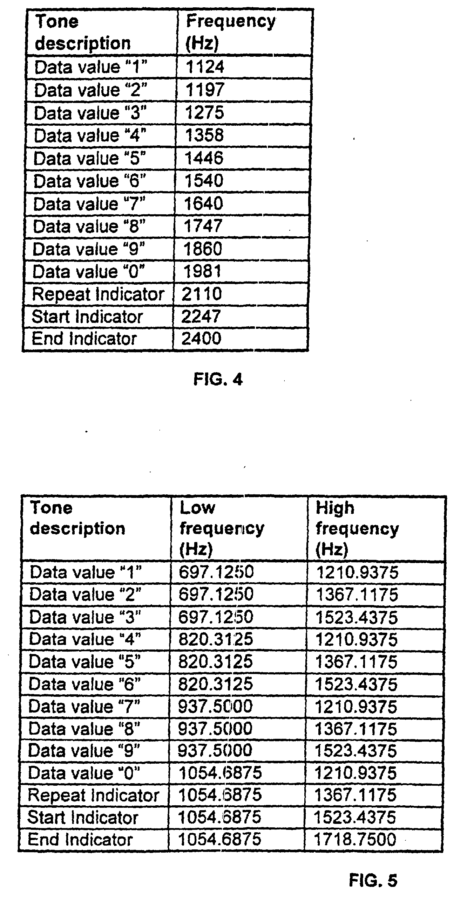

The alpha-numeric control information message thus provided is now encoded character by character into a series of simple audio signals which may be individually composed of single pure tones of different frequencies representing the individual characters which may be used as control information or dual combinations of pure tones as illustrated by the examples of encoding or conversion schemes given in figures 4 and 5. Such single or dual tone signals may be read-out in digital form by the dedicated software from a table 11 storing all possible single or dual tone signals for the individual characters to be encoded and being addressed from an address generator 11a controlled by the alpha-numeric information entered from the keyboard of the computer 10.

The digital representations read-out from the table 11 control a tone generator 12 generating single or dual tone signals of different frequencies which are representative of the individual characters of the alpha-numeric control information message. The simple audio signals representing the individual characters are supplied to an assembler device 13 in which a start indicator signal and an end indicator signal are added at the beginning and the end of the information carrying sequence, respectively and assembled therewith to form an audio signal sequence which in this embodiment constitutes the control information message to be incorporated into the overall signal to be transmitted by the server installation 1.

In figures 4 and 5 typical encoding or conversion schemes for single tone generation following CCIR/EEA standards and for a dual tone implementation, respectively, are shown. The tables in the figures indicate the individual audio frequencies assigned to numerical characters (digits) 1 to 0 as well as to the start and end indicator signal's described above and to a repeat indicator signal to be explained in the following for the single tone mode (figure 4) and the dual tone mode (figure 5) in which the individual audio signals are combinations of a low frequency tone and a high frequency tone.

In the described embodiment of the method and system of the invention where the control information message may typically be incorporated into broadcast radio and television programmes the control information message will typically appear at the site of the user installation in the form of an audible beeping sound signal sequence. In order to achieve a short response time and to avoid inconvenience it is, therefore, an essential feature of the invention that the overall duration of the control information is relatively short, preferably less than 5 seconds.

On the other hand, the individual single or dual tone signals generated by tone generator 12 must have a duration long enough to be clearly detectable without confusion in the user installation. To accomplish this the individual single or dual tone signals must preferably have a duration in the range from 30 to 150 ms and for practical purposes a duration of 85 ms has proven to be suitable.

The start and end indicator signals added to the information carrying part of the control information message must be clearly distinct from the tone signals representing the individual characters of the alpha-numeric information. Such a distinction can easily be obtained in a simple way by giving these indicator signals a frequency distinctly different from the frequencies of the character representing tone signals and/or a duration which is significantly longer than the duration of the latter , a convenient duration of the indicator signals being in the range from 200 to 600 ms with 450 ms as a suitable value for practical purpose.

Thereby, within the recommended maximum overall duration of 5 seconds a control information message may be formed which in addition to the start and end indicator signals may comprise from 10 to 150 individual characters.

In order to avoid confusion when the same characters is repeated several times in an uninterrupted part sequence of the total control information message, it is preferred that the tone signal representing such a repeated character is replaced at every second occurrence in such an uninterrupted part sequence by a special repeat indicator signal which may be a single or dual tone signal of a frequency different from any of the frequencies assigned to the character representing signals, but of the same duration as these signals.

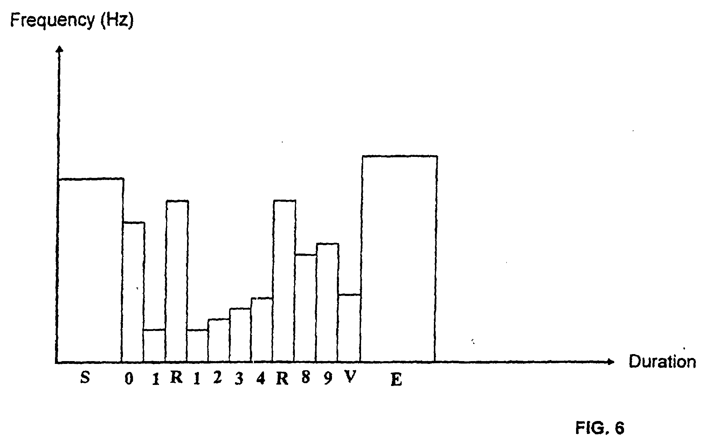

Figure 6 shows in a graphical representation an example of an audio signal sequence as supplied by the control information generator and encoder 3 by generation of individual character representing tone signals in accordance with the single tone scheme shown in figure 4 and representing a very simple control information message composed entirely of numerical characters "0111234489". The start, end and repeat indicator signals are denoted by S, E and R respectively. As will appear the complete audio signal sequence will have the character of a short beeping sound in the example shown with a duration of approximately two seconds.

In order to permit a detection of a transmission error in the user installation it may further be preferred that a relatively simple validation parameter is added to the transmitted control information signal sequence. In the simple case explained above of a message composed of numerical characters only such a validation parameter may be formed e.g. by repeated summation of the individual digits of the numerical message into a single digit which may, in principle, be encoded into a tone signal in the same way as the real characters of the control information message. To allow distinction of the validation parameter tone signal from the character representing tones signals the former may e.g. be assigned a predetermined location within the signal sequence, e.g. as the first tone signal after the start indicator or, as shown in the example in figure 6, where the validation parameter V calculated in accordance with the summation described above will be 4, as the last tone signal before the end indicator.

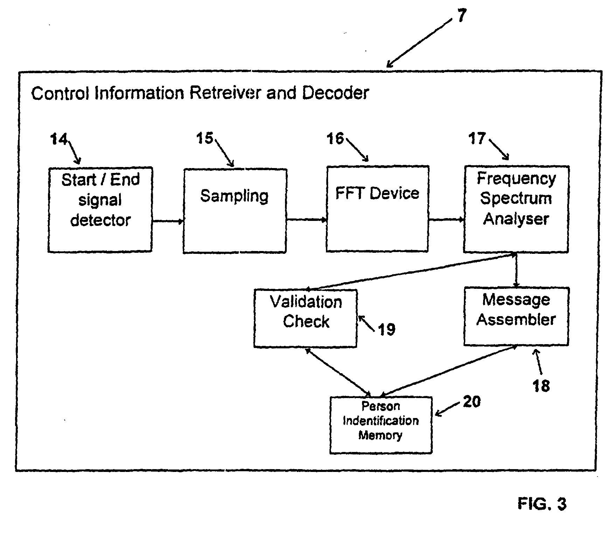

In figure 3 the control information message retriever and encoder 7 of the user installation 2 in figure 1 is shown in further detail. The overall signal transmitted from the server installation 1 and received by the receiver 6 in the user installation is supplied to a start and end indicator signal detector 14. By detection of a start indicator signal the following signal sequence is supplied to a sampling device 15 in which the received audio signal components are converted into digital PCM (pulse code modulated) data which are suitable for further analysis in the retriever and decoder 7.
The PCM data from the sampling device 15 are processed in a device 16 by Fast Fourier Transformation (FFT) and supplied to a frequency spectrum analyzer 17 detecting the frequencies of the individual components of the sampled signal sequence and thereby regenerating the individual character of the original alpha-numeric control information message generated in the server installation 1. The data stream resulting from the frequency spectrun analysis is supplied to a message assembler 18 forming the original message.

The output data sequence from frequency analyzer 17 will also include the validation parameter and is supplied in a device 19 to a validation check performing for the individual characters of the data sequence a validation to calculate a validation parameter in accordance with the same calculation as used in the server installation 1 and comparing this calculated validation parameter with the validation parameter transmitted from the server installation as part of the control information message. This comparison is performed after detection of the end indicator signal by detector 14.

Only by a positive result of the validation check in device 19 the assembled control information message a is passed on to the data processor 8 of the user computer installation.

It is important to note that in practice the functions of all devices 10 to 13 of the control information generator and decoder 3 in the server installation 1 and all devices 14 to 19 in the control information retriever and decoder 7 of the user installation 2 may be software-implemented in a personal computer, so that these devices will normally not appear as individual structural components of the system of the invention.

In the described embodiment of a control information message in the form of an audio signal sequence a personal computer equipped with a sound card may be used. In the server installation the sound card will perform the function of the tone generator 12 and in the user installation 2 the sound card will perform the functions of the detector and sampling devices 14 and 15.

In the method and system described so far and in the case where the control information message is incorporated in a broadcast radio or television signal the control information message will be received and processed by any member of the listening or viewing public in possession of a personal computer with a sound card and the dedicated software necessary for performing the functions of devices 14 to 19 of the control information retriever and decoder 7 of the user installation 2.

According to an important further development of the method and system of the invention it is also possible, however, to transmit the control information message by a targeted transmission to specifically selected groups of users or even a specifically selected individual.

To accomplish this the control information retriever and decoder 7 of the user installation 2 may as shown in figure 3 include a memory part 20 with stored personal information concerning the actual user such as name and address, date of birth, sex, occupation etc. which will identify the user as belonging to any of a number of specific groups, and in the server installation targeted address information to enable use of the transmitted control information message only by members of such a specific group will then be added to the control information message by the initial generation thereof in the personal computer 10, such targeted address information including at least one parameter specific to one group of users.

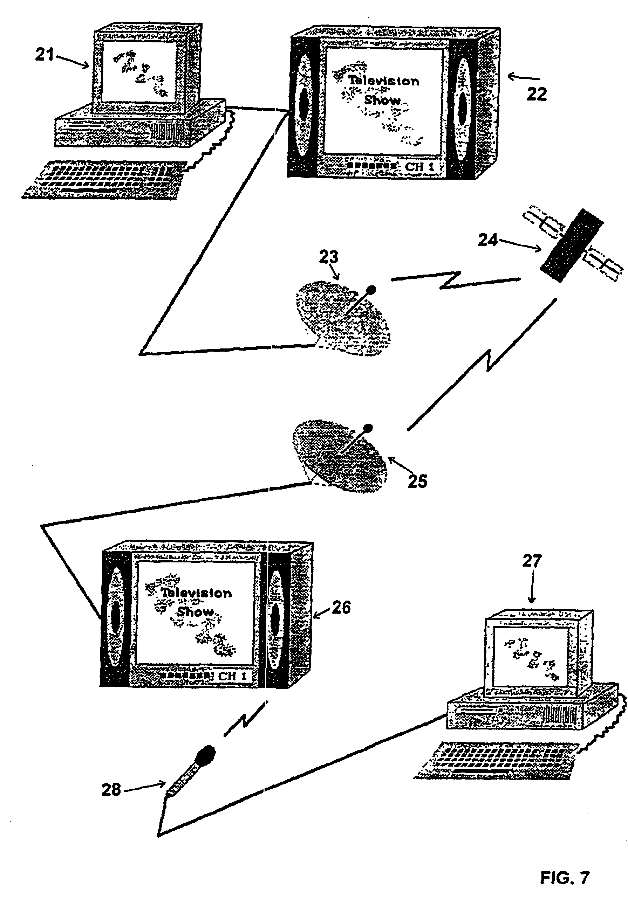

Figure 7 shows by way of example application of the method and system for the case of a satellite transmitted television programme already referred to in the foregoing. Such a television programme may typically be a tv entertainment show or an educational or business programme, but the application possibilities are numerous and in no way limited to such types of programmes.

The function of the server installation described in the foregoing are performed by a personal computer 21 linked to conventional tv recording and transmission equipment shown in the figure by a tv set 22 from which television signals are transmitted to the satellite transmission earth facility symbolically shown by a parabola 23 from which signals are transmitted in conventional way to an orbiting satellite 24 retransmitting the signals to a user earth facility as symbolically shown by a parabola 25 from which the television signals are transmitted through a cable connection to a tv receiver 26 linked with user installation.

As already mentioned in the described embodiment of a control information message in the form of an audio signal sequence the user installation may comprise a personal computer equipped with sound cards. The audio signal part of the television signals can be supplied to the user installation computer 27 either by a so-called SCART-cable connecting the computer installation with the tv-set or as shown in the figure by picking up the sound from the tv receiver loud speaker system by means of a microphone 28 connected with the usual microphone inlet to the computer sound card installation.

The example shown in figure 7 of incorporating the control information message into a broad cast television signal is, however, by no means limiting for the application of the method and system of the invention. Thus, it is perfectly possible to have a video programme incorporating the control information message recorded in conventional way on a tape which can either be used for later transmission or be directly purchased or acquired by users. Evidently it is also possible on the user side to link the tv set with a video recording apparatus in order to make an initial recording of the programme incorporating the control information method and perform a playback of the programme including the control information message at a later time.

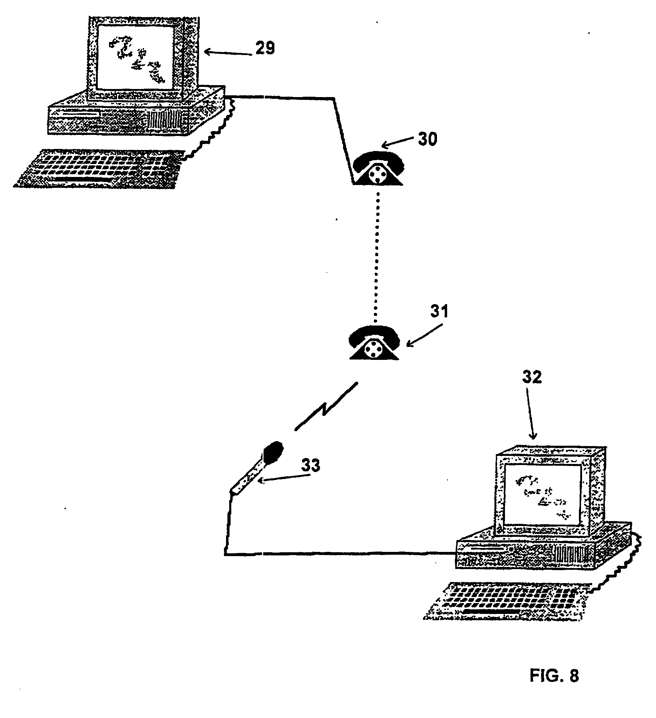

Neither is the transmission of the control information method as part of an overall signal in the form of a television signal limiting to the application of the method and the system of the invention. As shown by way of example in figure 8 another application possibility is to use transmission by way of telephone communication where the computer 29 in the server installation is connected with a telephone installation 30 connected through a conventional telephone network, which may include any type of such networks, with a telephone installation 31 connected with the user installation computer 32. Also in this case the signal received by the user telephone installation 31 may be transmitted to the computer installation 32 either through a cable connection or as shown in the figure by being picked up by a microphone 33.

As already mentioned in the foregoing the actual implementation of the method and system of the invention in the user installation will in addition to the dedicated software performing the function of the control information retriever and decoder in figure 3 and constituting the user interface between the receiver 6 and the memory 8 and processor 9 in the user computer installation require some form of application software with a stored programme controlling the type of action to be initiated in response to the received control information message. Depending on the actual application such actions may take many different forms, e.g. showing a picture, playing a video recording, starting a video game or a part thereof etc. and the method and system of the invention is in no way limited to any specific type of action to be initiated by the transmitted control information message.

In general user applications will be highly dependent on the actual field of use of the method and system of the invention.

Important specific uses of the method and the system of the invention according to the embodiment described in the foregoing where the control information method is transmitted as part of a radio or television signal is to allow interactive listener/viewer participation in a broadcast radio or television programme or interactive communication between the user computer installation programme including the control information methods recorded on a record carrier. A typical example of such use could for example be interactive participation of TV viewers in TV entertainment programmes like the well known "Wheel of Fortune"® allowing the person operating the user computer installation to take individual part in the game alongside with the direct participation in the TV show.

Another important field of use is the targeted transmission of a control information message to specific groups of persons. In this application, the method and system of the invention can be used for direct mailing or advertising, e.g. by having users of a selected group acquiring or purchasing a programme, controlling one or more actions to be taken in response to the control information message, recorded on a conventional computer record carrier such as a CD-ROM and then addressing persons belonging to the specific group with a control information message which could be transmitted e.g. as a part of a TV commercial or by direct telephone communication.

For the example described in the foregoing with reference to figure 7 it is evident that the broadcast signal with which the control information message is transmitted need not be a television signal, but could also be a radio signal containing only audio information.

It is further within the scope of the invention to apply the method and system to two-way communication between a server installation and one or more user computer installations. In such a case dedicated software performing the functions of the control information generator and encoder on the server side as well as the control information retriever and decoder on the user side must be present both in the server installation and the user installation.

Whereas the method and system of the invention has been described in the foregoing mainly by way of the embodiment involving encoding the control information message into an audio signal sequence and retrieving the original control information message on the user side by decoding such a transmitted audio signal sequence, the invention is not limited to this, since the control information message could be encoded into other signal forms such as a digital signal, eventually in encrypted or compressed form, and incorporated in an overall signal carrying audio and/or video information in digital form.

One type of highly actual applications of the method and system of the invention which could be foreseen are uses in which the action initiated by the transmitted control information message involves the establishment of communication between the user installation and the "Internet" or similar types of computer networks. For example, in the broadcasting of news on TV or radio this application will allow providing the user with access to more in-depth background information incorporated e.g. in a homepage for the news station by transmitting a control information message during the transmission of a specific news item.

## Claims

1. A method for initiating an action controlled by a prestored programme in one or more computer installations (2) by communication of a control information message from a control information generator (3) in a server installation remote from said one or more computer installations, comprising the steps of
generating said control information message in the control information generator (3) as a message of alpha-numeric information,
encoding said message into a signal sequence of a relatively short duration,
adding a start indicator signal and an end indicator signal at the beginning and end of said signal sequence,
incorporating said signal sequence with said start and end indicator signals into an overall audio or video information carrying signal comprising signal parts from other signal sources than said control information generator (3),
communicating said overall signal to said one or more computer installations (2),
retrieving said signal sequence from said overall signal at each of said computer installations (2),
decoding said signal sequence into said message of alpha-numeric information, and
using said message to initiate said action in each of said computer installations (2), said action being of a duration substantially longer than said relatively short duration.

2. A method as claimed in claim 1, wherein said signal sequence comprises a series of audio signals representing individual characters of said message of alpha-numeric information, and said start and end indicator signals are audio signals. distinct from said character representing signals.

3. A method as claimed in claim 1 or 2, wherein said relatively short duration of said signal sequence is less.than 5 seconds.

4. A method as claimed in claim 3, wherein each information character of said message is encoded into an audio sound signal taken from a table of representations of predetermined audio sound signals.

5. A method as claimed in claim 4, wherein said representations control the generation of distinct audio sound signals comprising pure tone signals of separate frequencies or combinations thereof.

6. A method as claimed in claim 5, wherein each of said tone signals or combinations has a duration of 30 to 150 ms.

7. A method as claimed in claim 4, 5 or 6, wherein the retrieval of said signal sequence comprises sampling of said simple audio sound signals into digital PCM data and performing a frequency spectrum analysis of said PCM data.

8. A method as claimed in claim 7 as dependent on claims 5 or 6 wherein said PCM data are subjected to Fast Fourier transformation prior to said frequency spectrum analysis.

9. A method as claimed in any of claims 4 to 7, wherein a repeat indicator audio sound signal distinct from any of said predetermined audio signals is substituted for said audio sound signal at every second occurrence of a character in an uninterrupted part sequence of identical characters within said message.

10. A method as claimed in claim as dependent on Claim 6, wherein said repeat indicator signal is a tone signal having the same duration as said pure tone signal or combinations, but a frequency different from the frequency or frequencies of any character representing tone signal or combinations thereof.

11. A method as claimed in claim 5, wherein said start and end indicator signals have a duration which is substantially longer than the duration of said pure tone signals.

12. A method as claimed in claim 11, wherein said duration is 200-600 ms.

13. A method as claimed in any of claim 1 to 12, wherein a validation signal is added to said signal sequence and a validation check is performed on the reconverted alpha-numerical information in each of said computer installations (2).

14. A method as claimed in any of claims 1 to 13, wherein said overall signal forms part of a broadcast radio or television signal.

15. A method as claimed in claim 14, wherein an identification signal is added to said signal sequence to identify any of a number of message suppliers in a multitasking system.

16. A method as claimed in any of claims 1 to 13, wherein said overall signal forms part a recorded audio and/or video signal on a record carrier available at each of said computer installations (2) and a playback of said record carrier is performed prior to the retrieval of said signal sequence.

17. A method as claimed in any of claims 14, 15 or 16, wherein person identification information is provided at each of said computer installations (2) to identify data for a user of said installation as belonging to any of a number of specific groups of persons, where each groups is defined by at least one common personal data parameter, and further comprising the steps of adding addressing information to the message generated by said control information generator (3) to address at least one of said groups and using the reconverted message in the computer installations (2) to initiate a prestored computer programme specific for said group or groups.

18. A method as claimed in claim 14 or 15, wherein the action initiated by said message comprises interactive listener/viewer participation in a broadcast radio or television programme.

19. A method as claimed in claim 16, wherein the action initiated by said message comprises interactive communication between the programme stored on said record carrier and said computer installation.

20. A method as claimed in claim 17 wherein the action initiated by said message comprises direct mailing or advertising targeted to any of said specific groups.

21. A method as claimed in any of claims 1 to 18, wherein a two.way communication is effected between said sever installation and any of said computer installations.

22. A system for initiating an action controlled by a prestored programme in one or more computer installations (2) by communication of control information from a control information generator (3) remote from said one or more computer installations, said control information generator (3) comprising
means (10) for generating said control information in the form of a message of alpha-numeric information,
means (11, 12) for encoding said message into a signal sequence of a relatively short duration,
said control information generator (3) forming part of a server installation (1) comprising
means (4) for incorporating said signal sequence into an overall audio and/or video information carrying signal comprising signal parts from other sources than said control information generator (3),
means (13) for adding a start indicator signal and an end indicator signal at the beginning and end of said sequence, and
means for communicating said overall signal including said signal sequence with said start and end indicator signals to said one or more computer installations (2), and
each of said computer installations (2) comprising
means (7) for retrieving said signal sequence from said overall signal,
means (15 - 19) for decoding said signal sequence into said message of alpha-numeric information, and
means (9) for using said message to initiate said action controlled in each of said computer installations, said action being of a duration substantially longer than said relatively short duration.

23. A system as claimed in claim 22. wherein said encoding means (11, 12) comprises means for encoding said message into a series of audio signals representing individual characters of said alpha-numeric information and said retrieving means device comprises an audio receiver device (6).

24. A system as claimed in claim 23. wherein said relatively short duration less than 5 seconds.

25. A system as claimed in claim 24, wherein said encoding means (11, 12) comprises means for encoding each information character of said message into a representation of an audio sound signal, a table (11) of representations of predetermined audio sound signals identifying each such information character, and means (11A) for addressing said table to read-out a specific representation of a sound signal identifying said character.

26. A system as claimed in claim 25, wherein said encoding means comprises a tone generator (!2) controlled by representations read-out from said table (11) for generating pure tone signals of separate frequencies or combinations thereof.

27. A system as claimed in claim 25 or 26, wherein said retrieving means (7) at each of said computer installations (2) comprises means (15) for sampling of said audio sound signals into digital PCM data and a frequency spectrum analyzer (17) to perform a frequency spectrum analysis of said PCM data.

28. A system as claimed in claim 27, wherein said PCM data are supplied to means (16) for performing a Fast Fourier Transformation prior to said frequency spectrum analysis.

29. A system as claimed in any of claims 25 to 28, wherein said control information generator (3) comprises means for generating a repeat indicator audio sound signal distinct form any of said predetermined audio signals and means for substituting said repeat indicator signal for said audio sound signal at every second occurrence of a character in an uninterrupted part sequence of identical characters within said message.

30. A system as claimed in any of claims 22 to 29, wherein said server installation (1) comprises means for adding a validation signal to said signal sequence and each of said computer installations (2) comprises means for performing a validation check on said reconverted message.

31. A system as claimed in any of claims 22 to 30, wherein said server installation (1) forms part of a broadcasting system for radio or television signals.

32. A system as claimed in claim 31, wherein said broadcasting system comprises means for adding an identification signal to said signal sequence to identify any of a number of message suppliers in a multitasking system.

33. A system as claimed in any of claims 22 to 30, wherein said server installation (1) comprises recording means for recording said overall signal on a record carrier and each of said computer installations (2) comprises a playback apparatus for said recorded overall signal.

34. A system as claimed in any of claims 22 to 33, wherein each of said computer installations (2) comprises means for storing person identification information to identify data for a user of said installation as belonging to any of a number of specific groups of persons, where each groups is defined by at least one common personal data parameter, and said server installation comprises means for adding addressing information to said message to address at least one of said groups.

35. A system as claimed in any of claims 22 to 34, wherein each of said computer installations (2) comprises a memory (8) of prestored computer programmes and means (9) for using said reconverted message to initialize one of said prestored computer programmes.

## Patentansprüche

1. Verfahren zum Starten einer in einem vorweg gespeicherten Programm gesteuerten Funktion in einer oder mehreren Computerinstallationen (2) durch Kommunikation eines Informationsbescheids von einem Steuerinformationsgenerator (3) in einer von erwähnter einer oder mehreren Computerinstallationen entfernten Server-installation, umfassend die Stufen:
Erzeugen des Informationsbescheids im Steuerinformationsgenerator (3) als ein Bescheid alphanumerischer Information,
Kodieren des Bescheids in eine Signalsequenz von verhältnismässig kurzer Dauer,
Hinzufügen eines Startanzeigesignals und eines Endanzeigesignals am Beginn und am Schluss erwähnter Signalsequenz,
Aufnahme erwähnter Signalsequenz mit Start- und Endanzeigesignalen in ein allgemeines Audio- oder Video-Informationssignal mit Signalteilen von anderen Signalquellen als erwähnten Steuerinformationsgenerator (3),
Übertragen erwähnten allgemeinen Signals auf die eine oder mehrere Computerinstallationen(2),
Wiederauffinden erwähnter Signalsequenz aus dem allgemeinen Signal in jeder Computerinstallation (2),
Dekodieren der Signalsequenz in erwähnten Bescheid alphanumerischer Information, und
Benutzen erwähnten Bescheids zum Starten erwähnter Funktion in jeder der Computerinstallationen (2), welche Funktion wesentlich länger dauert als jene von verhältnismässig kurzer Dauer.

2. Verfahren nach Anspruch 1, bei welchem die Signalsequenz eine Reihe von Audiosignalen umfasst, die individuelle Zeichen erwähnten Bescheids alphanumerischer Information sind, und erwähnte Start- und Endanzeigesignale akustische Signale sind, die sich von den Zeichensignalen deutlich unterscheiden.

3. Verfahren nach Anspruch 1 oder 2, bei welchem die verhältnismässig kurze Dauer erwähnter Signalsequenz weniger als 5 Sekunden ist.

4. Verfahren nach Anspruch 3, bei welchem jedes Informationszeichen erwähnten Bescheids in ein Audio-Schallsignal aus einem Register von Darstellungen vorausbestimmter Audio-Schallsignale kodiert wird.

5. Verfahren nach Anspruch 4, bei welchem erwähnte Darstellungen das Erzeugen unterschiedlicher Audio-Schallsignale umfassend reine Tonsignale separater Frequenzen oder deren Kombinationen steuern.

6. Verfahren nach Anspruch 5, bei welchem jedes Tonsignal oder Kombinationen eine Dauer von 30-150 Millisekunden hat.

7. Verfahren nach Anspruch 4, 5 oder 6, bei welchem das Wiederauffinden erwähnter Signalsequenz Abtasten einfacher Audio-Schallsignale in digitale PCM Daten und Durchführen einer Frequenzspektrum-Analyse erwähnter PCM Daten umfasst.

8. Verfahren nach Anspruch 7 abhängig von Anspruch 5 oder 6, bei welchem die PCM Daten vor erwähnter Frequenzspektrum-Analyse einer Fast Fourier-Transformation unterzogen werden.

9. Verfahren nach einem der Ansprüche 4-7, bei welchem bei jedem zweiten Vorkommen eines Zeichens in einer nicht unterbrochenen Teilsequenz identischer Zeichen innerhalb erwähnten Bescheids das erwähnte Audio-Schallsignal durch ein von jedem vorausbestimmten Audio-Signal unterschiedliches Audio-Schall-Wiederhol-Anzeigesignal ersetzt wird.

10. Verfahren nach Anspruch 9 abhängig von Anspruch 6, bei welchem das Wiederhol-Anzeigesignal ein Tonsignal von derselben Dauer als das reine Tonsignal oder Kombinationen davon ist, aber mit einer von der Frequenz oder den. Frequenzen eines jeglichen Zeichens des repräsentierenden Tonsignals oder dessen Kombinationen unterschiedlichen Frequenz.

11. Verfahren nach Anspruch 5, bei welchem erwähnte Start- und Endanzeigesignale eine Dauer aufweisen, die wesentlich länger ist als die Dauer der reinen Tonsignale.

12. Verfahren nach Anspruch 11, bei welchem die Dauer 200-600 Millisekunden ist.

13. Verfahren nach einem der Ansprüche 1-12, bei welchem an erwähnte Signalsequenz ein Gültigkeitssignal angeschlossen ist, und auf der rekonvertierten alphanumerischen Information in jeder der erwähnten Computerinstallationen (2) eine Gültigkeitsprüfung durchgeführt wird.

14. Verfahren nach einem der Ansprüche 1-13, bei welchem das allgemeine Signal einen Teil eines gesendeten Radio- oder Fernsehsignals bildet.

15. Verfahren nach Anspruch 14, bei welchem an erwähnte Signalsequenz ein Identifikationssignal zum Identifizieren eines jeden einer Anzahl von Bescheidmeldern in einem Multitaskingsystem angeschlossen ist.

16. Verfahren nach einem der Ansprüche 1-13, bei welchem das allgemeine Signal einen Teil eines registrierten Audio- und/oder Videosignals auf einem in jeder der Computerinstallationen (2) zur Verfügung stehenden Signalträger bildet, wobei vor Retrieval erwähnter Signalsequenz eine Wiedergabe erwähnten Signalträgers erfolgt.

17. Verfahren nach einem der Ansprüche 14, 15 oder 16, bei welchem Verfahren bei jeder Computerinstallation (2) Personen-Identifizier-Information vorgesehen ist, zum Identifizieren von Daten für einen Benutzer erwähnter Installationen, welcher Benutzer einer beliebigen aus einer Anzahl von spezifischen Gruppen von Personen angehört, wobei jede Gruppe durch mindestens einen gemeinsamen Datenparameter definiert ist, und ferner umfassend die Stufen des Hinzufügens von adressierender Information zu dem vom Steuerinformationsgenerator (3) erzeugten Bescheid an mindestens eine der erwähnten Gruppen, und Benutzen der rekonvertierten Meldung in den Computerinstallationen zum Starten eines speziell für diese Gruppe oder Gruppen vorweg gespeicherten Computerprogramms.

18. Verfahren nach Anspruch 14 oder 15, bei welchem die durch erwähnten Bescheid gestartete Funktion interaktive Mithörer/Seherteilnahme in einem Radio- oder Fernsehprogramm umfasst.

19. Verfahren nach Anspruch 16, bei welchem die durch erwähnten Bescheid gestartete Funktion interaktive Kommunikation zwischen dem auf dem Signalträger und der Computerinstallation gespeicherten Programm umfasst.

20. Verfahren nach Anspruch 17, bei welchem die durch erwähnten Bescheid gestartete Funktion ein direktes Mailen oder Werbung, gezielt auf eine der erwähnten spezifischen Gruppen umfasst.

21. Verfahren nach einem der Ansprüche 1-18, bei welchem zwischen erwähnter Serverinstallation und einer beliebigen der Computerinstallationen eine Zweiweg-Kommunikation erfolgt.

22. System zum Starten einer in einem vorweg gespeicherten Programm gesteuerten Funktion in einer oder mehreren Computerinstallationen (2) durch Kommunikation von Informationen von einem von erwähnter einer oder mehreren Computerinstallationen entfernten Steuerinformationsgenerator (3), welcher Steuerinformationsgeneratar (3) umfasst :
Mittel (10) zum Erzeugen des Informationsbescheids als ein Bescheid alphanumerischer Information,
Mittel (11, 12) zum Kodieren des Bescheids in eine Signalsequenz von verhältnismässig kurzer Dauer,
erwähnten Steuerinformationsgenerator (3), der einen Teil einer Serverinstallation (1) bildet, welche Server-installation umfasst wie folgt:
Mittel (4) zur Aufnahme erwähnter Signalsequenz in ein allgemeines Audio und/oder Video-Informationssignal mit Signalteilen von anderen Signalquellen als erwähntem Steuerinformationsgenerator (3),
Mittel (13) zum Hinzufügen eines Start- und Endanzeigesignals am Beginn und Ende erwähnter Sequenz, und
Mittel zum Übertragen von erwähntem allgemeinen Signal einschliesslich erwähnter Signalsequenz mit Start- und Endanzeigesignalen auf die eine oder mehrere Computerinstallationen (2), und
jede der Computerinstallationen (2) umfassend
Mittel (7) zum Wiederauffinden erwähnter Signalsequenz aus dem allgemeinen Signal,
Mittel (15-19) zum Dekodieren der Signalsequenz in erwähnten Bescheid alphanumerischer Information, und
Mittel (9) zum Benutzen erwähnten Bescheids zum Starten erwähnter gesteuerter Funktion in jeder der Computerinstallationen, welche Funktion wesentlich länger dauert als jene von verhältnismässig kurzer Dauer.

23. System nach Anspruch 22, bei welchem erwähnte Kodiermittel (11, 12) Mittel zum Kodieren des Bescheids in eine Reihe von Audiosignalen umfasst, die individuelle Zeichen erwähnten Bescheids alphanumerischer Information darstellen, und erwähnte Wiederauffindvorrichtung eine Tonaufnahmevorrichtung (6) umfasst.

24. System nach Anspruch 23, bei welchem die verhältnismässig kurze Dauer weniger als 5 Sek. ist.

25. System nach Anspruch 24, bei welchem erwähnte Kodiermittel (11, 12) Mittel zum Kodieren jedes Informationszeichens des Bescheids in eine Darstellung eines Audio-Schallsignals, ein Register (11) von Darstellungen vorausbestimmter Audio-Schallsignale, die ein jedes Informationszeichen identifizieren, und Mittel (11A) zum Aktivieren des Registers eine bestimmte Darstellung eines das erwähnte Zeichen identifizierendes Schallsignals auszulesen, umfassen.

26. System nach Anspruch 25, bei welchem erwähntes Kodiermittel einen Tongenerator (!2) umfasst, der durch aus erwähntem Register (11) ausgelesene Darstellungen gesteuert wird, zum Erzeugen reiner Tonsignale separater Frequenzen oder deren Kombinationen.

27. System nach Anspruch 25 oder 26, bei welchem erwähntes Wiederauffindmittel (7) bei jeder Computerinstallation (2) Mittel (15) für Abtasten erwähnter Audio-Schallsignale in digitale PCM Daten sowie einen Frequenzspektrum-Analysator (17) zum Durchführen einer Frequenzspektrum-Analyse erwähnter PCM Daten umfasst.

28. System nach Anspruch 27, bei welchem erwähnte PCM Daten mit Mitteln (16) zum Durchführen einer Fast-Fourier-Transformation vor erwähnter Frequenzspektrum-Analyse versehen werden.

29. System nach einen der Ansprüche 25-28, bei welchem erwähnter Steuerinformationsgenerator (3) Mittel zum Erzeugen eines von jedem der vorausbestimmten Audiosignale unterschiedlichen Audio-Schall-Wiederhol-Anzeigesignals, und Mittel zum Ersetzen des Audio-Schallsignals durch das Wiederhol-Anzeigesignals bei jedem zweiten Vorkommen eines Zeichens in einer nicht unterbrochenen Teilsequenz identischer Zeichen innerhalb erwähnten Bescheids umfasst.

30. System nach einem der Ansprüche 22-29, bei welchem erwähnte Serverinstallation (1) Mittel zum Hinzufügen eines Gültigkeitssignals zu der Signalsequenz umfasst, und wobei jede Computerinstallation (2) Mittel zum Durchführen einer Gültigkeitsprüfung der rekonvertierten Nachricht aufweist.

31. System nach einem der Ansprüche 22-30, bei welchem erwähnte Serverinstallation (1) einen Teil eines Sendesystems für Radio- oder Fernsehsignale bildet.

32. System nach Anspruch 31, bei welchem erwähntes Sendesystem Mittel zum Hinzufügen eines Identifikationssignals zu der Signalsequenz zum Identifizieren eines jeden einer Anzahl von Bescheidmeldern in einem Multitaskingsystem umfasst.

33. System nach einem der Ansprüche 22-30, bei welchem erwähnte Serverinstallation (1) Registriermittel zum Registrieren erwähnten allgemeinen Signals auf einem Signalträger umfasst, und jede der Computerinstallationen (2) eine Wiedergabe-Einrichtung für erwähntes aufgezeichnete allgemeine Signal aufweist.

34. System nach einem der Ansprüche 22-33, bei welchem jede der Computerinstallationen (2) Mittel zum Speichern von Personen-Identifizier-Informationen zum Identifizieren von Daten für einen Benutzer erwähnter Installation aufweist, welcher Benutzer einer beliebigen einer Anzahl von spezifischen Persongruppen angehört, wobei jede Gruppe durch mindestens einen gemeinsamen Datenparameter definiert ist, und erwähnte Serverinstallation Mittel zum Hinzufügen von adressierender Information zu erwähntem Bescheid an mindestes eine der erwähnten Gruppen umfasst.

35. System nach einem der Ansprüche 22-34, bei welchem jede der Computerinstallationen (2) einen Speicher (8) für im voraus gespeicherte Computerprogramme und Mittel (9) zum Benutzen erwähnten rekonvertierten Bescheids zum Starten einer der vorausgespeicherten Computerprogramme aufweist.

## Revendications

1. Procédé d'initialisation d'une opération commandée par un programme mémorisé d'avance dans une ou plusieurs installations d'ordinateurs (2) par communication d'un message d'informations de commande depuis un générateur d'informations de commande (3) dans une installation de serveur à distance de ladite ou desdites installations d'ordinateurs, comprenant les étapes
de générer ledit message d'informations de commande dans le générateur d'informations de commande (3) comme un message d'information alphanumérique,
d'encoder ledit message dans une séquence de signaux d'une durée relativement courte,
d'ajouter un signal indicateur de départ et un signal indicateur de clôture au début et à la fin de ladite séquence de signaux,
d'incorporer ladite séquence de signaux avec lesdits signaux indicateurs de départ et de clôture dans un signal composite comportant des informations d'audio ou de vidéo comprenant des parties de signal d'autres sources de signaux que ledit générateur d'informations de commande (3),
de communiquer ledit signal composite à ladite ou auxdites installations d'ordinateurs (2),
de retrouver ladite séquence de signaux dudit signal composite à chacune desdites installations d'ordinateurs (2),
de décoder ladite séquence de signaux audit message d'information alphanumérique, et
d'utiliser ledit message à initialiser ladite opération dans chacune desdites installations d'ordinateurs (2), ladite opération étant d'une durée essentiellement plus longue que ladite durée relativement courte.

2. Procédé selon la revendication 1, où ladite séquence de signaux comprend une série de signaux audios représentant des caractères individuels dudit message d'information alphanumérique, et lesdits signaux indicateurs de départ et de clôture sont des signaux audios distincts desdits signaux représentant des caractères.

3. Procédé selon la revendication 1 ou 2, où ladite durée relativement courte de ladite séquence de signaux est inférieure à 5 secondes.

4. Procédé selon la revendication 3, où chaque caractère d'information dudit message est encodé dans un sïgnal sonore audio venant d'un tableau de représentations de signaux sonore audios prédéterminés.

5. Procédé selon la revendication 4, où lesdites représentations contrôlent la génération de signaux sonores audios distincts comprenant des tonalités pures de fréquences séparées ou des combinaisons de celles-ci.

6. Procédé selon la revendication 5, où chacune desdites tonalités ou des combinaisons de celles-ci présentent une durée de 30 à 150 ms.

7. Procédé selon la revendication 4, 5 ou 6, où la recherche de ladite séquence de signaux comprend le sampling desdits signaux sonores audios simples dans des données digitales PCM et la mise en oeuvre d'une analyse spectrale des fréquences desdites données PCM.

8. Procédé selon la revendication 7 étant dépendante de la revendication 5 ou 6, où lesdites données PCM sont soumises à une transformation de Fast Fourier avant ladite analyse spectrale des fréquences.

9. Procédé selon l'une quelconque des revendications 4-7, où un signal sonore audio indicateur à répétition distinct de tous lesdits signaux audios prédéterminés est remplacé pour ledit signal sonore audio les deux coïncidences d'un caractère dans une séquence partielle ininterrompue de caractères identiques dans ledit message.

10. Procédé selon la revendication 9 étant dépendante de la revendication 6, où ledit signal sonore indicateur à répétition est une tonalité ayant la même durée que ladite tonalité pure ou les combinaisons, mais une fréquence différente de la fréquence ou des fréquences de tout caractère représentant une tonalité ou des combinaisons.

11. Procédé selon la revendication 5, où lesdits signaux indicateurs de départ et de clôture présentent une durée qui est essentiellement plus longue que la durée desdites tonalités pures.

12. Procédé selon la revendication 11, où ladite durée est 200-600 ms.

13. Procédé selon l'une quelconque des revendications 1-12, où un signal de validation est ajouté à ladite séquence de signaux et un contrôle de validation est effectué sur les informations alphanumériques reconverties dans chacune desdites installations d'ordinateurs (2).

14. Procédé selon l'une quelconque des revendications 1-13, où ledit signal composite fait partie d'un signal de radio grand public ou de télévision.

15. Procédé selon la revendication 14, où un signal d'identification est ajouté à ladite séquence de signaux pour identifier chacun d'un nombre de fournisseurs de message dans un système à tâches multiples.

16. Procédé selon l'une quelconque des revendications 1-13, où ledit signal composite fait partie d'un signal enregistré audio et/ou vidéo sur un porteur enregistreur accessible à chacune des installations d'ordinateurs (2) et un play-back dudit porteur enregistreur est effectué avant la recherche de ladite séquence de signaux.

17. Procédé selon l'une quelconque des revendications 14, 15 ou 16, où de l'information d'identification personnelle est pourvue à chacune desdites installations d'ordinateurs (2) afin d'identifier des données pour un utilisateur de ladite installation comme appartenant à quelconque d'un nombre de groupes spécifiques de personnes, chaque groupe étant défini par au moins un paramètre commun de données personnelles, et de plus comprenant les étapes d'ajouter des informations à adresses au message généré par ledit générateur d'informations de commande (3) pour adresser au moins l'un desdits groupes et utilisant le message reconverti dans les installations d'ordinateurs (2) pour initialiser un programme informatique mémorisé d'avance spécifique pour ledit groupe ou lesdits groupes.

18. Procédé selon la revendication 14 ou 15, où l'opération initialisée par ledit message comprend la participation interactive d'auditeur/téléspectateur dans un programme de radio grand public ou de télévision.

19. Procédé selon la revendication 16, où l'opération initialisée par ledit message comprend la communication interactive entre le programme mémorisé sur ledit porteur enregistreur et ladite installation d'ordinateur.

20. Procédé selon la revendication 17, où l'opération initialisée par ledit message comprend la publicité par correspondance ou le publipostage ciblés à quelconque dudit groupe spécifique.

21. Procédé selon l'une quelconque des revendications 1-18, où une communication bidirectionnelle est effectuée entre ladite installation de serveur et chacune desdites installations d'ordinateurs

22. Système d'initialisation d'une opération commandée par un programme mémorisé d'avance dans une ou plusieurs installations d'ordinateurs (2) par communication d'un message d'informations de commande depuis un générateur d'informations de commande (3) à distance de ladite ou desdites installations d'ordinateurs, ledit générateur d'informations de commande (3) comprenant
des moyens (10) pour générer ladite information de commande dans la forme d'un message d'information alphanumérique,
des moyens (11, 12) pour encoder ledit message dans une séquence de signaux d'une durée relativement courte,
ledit générateur d'informations de commande (3) formant partie d'une installation de serveur (1) comprenant
des moyens (4) pour incorporer ladite séquence de signaux dans un signal composite comportant des informations d'audio et/ou de vidéo comprenant des parties de signal d'autres sources que ledit générateur d'informations de commande (3),
des moyens (13) pour ajouter un signal indicateur de départ et un signal indicateur de clôture au début et à la fin de ladite séquence de signaux, et
des moyens pour communiquer ledit signal composite comprenant ladite séquence de signaux avec lesdits signaux indicateurs de départ et de clôture à ladite une installation d'ordinateur ou aux plusieurs installations d'ordinateurs (2), et
chacune desdites installations d'ordinateurs (2) comprenant
des moyens (7) pour retrouver ladite séquence de signaux dudit signal composite,
des moyens (15-19) pour décoder ladite séquence de signaux dans ledit message d'information alphanumérique, et
des moyens (9) pour utiliser ledit message pour initialiser ladite opération contrôlée dans chacune desdites installations d'ordinateurs, ladite opération étant d'une durée essentiellement plus longue que ladite durée relativement courte.

23. Système selon la revendication 22, où ledit moyen d'encodage (11, 12) comprend des moyens pour encoder ledit message dans une série de signaux audios représentant des caractères individuels dudit message d'information alphanumérique et ledit dispositif de recherche comprend un dispositif récepteur audio (6).

24. Système selon la revendication 23, où ladite durée relativement courte est inférieure à 5 secondes.

25. Système selon la revendication 24, où ledit moyen d'encodage (11, 12) comprend des moyens pour encoder chaque caractère d'information dudit message dans une représentation d'un signal sonore audio, un tableau (11) de représentations de signaux sonores audios prédétermines identifiant chaque tel caractère d'information, et des moyens (11A) pour adresser ledit tableau à montrer une représentation spécifique d'un signal sonore identifiant ledit caractère.

26. Système selon la revendication 25, où ledit ledit moyen d'encodage comprend un générateur électroacoustique (12) commandé par des représentations montrées dudit tableau (11) pour générer des tonalités pures de fréquences séparées ou des combinaisons de celles-ci.

27. Système selon la revendication 25 ou 26, où ledit moyen de recherche (7) à chacune desdites installations d'ordinateurs (2) comprend de moyens (15) pour le sampling desdits signaux sonores audios dans des donnés digitales PCM et un analyseur spectral des fréquences (17) pour la mise en oeuvre d'une analyse spectrale des fréquences desdites données PCM.

28. Système selon la revendication 27, où lesdites données PCM sont pourvues à des moyens (16) pour la mise en oeuvre d'une Transformation Fast Fourier avant ladite analyse spectrale des fréquences.

29. Système selon l'une quelconque des revendications 25-28, où ledit générateur d'informations de commande (3) comprend des moyens pour générer un signal sonore audio indicateur à répétition distinct de tous lesdits signaux audios prédéterminés et des moyens pour remplacer ledit signal indicateur à répétition pour ledit signal sonore audio les deux coïncidences d'un caractère dans une séquence partielle ininterrompue de caractères identiques dans ledit message.

30. Système selon l'une quelconque des revendications 22-29, où ledit installation de serveur (1) comprend de moyens pour ajouter un signal de validation à ladite séquence de signaux et chacune desdites installations d'ordinateurs (2) comprend des moyens pour effectuer un contrôle de validation sur ledit message reconverti.

31. Système selon l'une quelconque des revendications 22-30, où ledit installation de serveur (1) fait partie d'un système de diffusion de signaux par radio ou télévision.

32. Système selon la revendication 31, où ledit système de diffusion comprend des moyens pour ajouter un signal d'identification à ladite séquence de signaux pour identifier chacun d'un nombre de fournisseurs de messager dans un système à tâches multiples.

33. Système selon l'une quelconque des revendications 22-30, où ladite installation de serveur (1) comprend des moyens d'enregistrement pour faire enregistrer ledit signal composite sur un porteur enregistreur et chacune des installations d'ordinateurs (1) comprend. un appareil de play-back pour ledit signal composite enregistré.

34. Système selon l'une quelconque des revendications 22-33, où chacune des installations d'ordinateurs (2) comprend des moyens pour mémoriser de l'information d'identification personnelle afin d'identifier des données pour un utilisateur de ladite installation comme appartenant à quelconque d'un nombre de groupes spécifiques de personnes, chaque groupe étant défini par au moins un paramètre commun de données personnelles, et ladite installation de serveur comprend des moyens pour ajouter des information à adresses audit message pour adresser au moins l'un desdits groupes.

35. Système selon l'une quelconque des revendications 22-34, où chacune des installations d'ordinateurs (2) comprend une mémoire (8) de programmes informatiques mémorisés d'avance et des moyens (9) pour utiliser ledit message reconverti pour initialiser l'un desdits programmes informatiques mémorisés d'avance.
